# EUROPÄISCHE PATENTSCHRIFT

(11) **EP 1 484 360 B1**
(45) Veröffentlichungstag und Bekanntmachung des Hinweises auf die Patenterteilung: **31.10.2012**
(21) Anmeldenummer: 04011228.6
(22) Anmeldetag: 12.05.2004
(51) Int. Cl.: C08K 3/00, C08K 5/00

(54) **Elastomergebundenes Plattenmaterial und Verfahren zu seiner Herstellung**
Elastomer bound plate material and process for its production
Matière de plaque à liaison élastomère et son procédé de fabrication

(30) Priorität: 06.06.2003 DE 10325700
(43) Veröffentlichungstag der Anmeldung: 08.12.2004
(73) Patentinhaber: Klinger AG, 6300 Zug (CH)
(72) Erfinder: Rustemeyer, Ulrich Dr. Ing., 6304 Zug (CH); Latte, Jörg Dr., 6304 Zug (CH); Piringer, Stephan, 6304 Zug (CH)
(74) Vertreter: Spierenburg, Pieter

(56) Entgegenhaltungen:
- EP-A- 0 324 278
- EP-A- 0 407 097
- EP-A- 0 739 941
- FR-A- 2 296 661
- FR-A- 2 691 973
- DATABASE WPI Section Ch, Week 198149 Derwent Publications Ltd., London, GB; Class A12, AN 1981-90098D XP002296646 & JP 56 136841 A (ENGINEERING PLASTIC) 26. Oktober 1981 (1981-10-26)

## Beschreibung

Die Erfindung betrifft ein elastomergebundenes Plattenmaterial nach dem Oberbegriff des Anspruchs 1 und Verfahren nach dem Oberbegriff des Anspruchs 10 zu seiner Herstellung.

Es ist bekannt, daß faserverstärkte Elastomerdichtungen einer irreversiblen Alterung unterliegen. Früher wurde dies durch einen sehr hohen Asbestanteil von bis zu 80 Gew.-% kaschiert, so daß das Material trotz gealterten Elastomers seine Stabilität behielt. Nachdem die Gesundheitsgefährdung von Asbest erkannt wurde, wurde versucht, dieses durch andere, insbesondere synthetische Fasern wie p-Aramid-, Glas- oder Kohlenstofffasern zu ersetzen. Aufgrund der hohen Kosten für diese Fasem bzw. aufgrund von Herstellungsproblemen unter Verwendung bestimmter Fasern mußte deren Anteil jedoch stark vermindert und durch preiswerte pulverige Füllstoffe wie Kaoline, Siliciumdioxid, Graphit etc. ersetzt werden.

Hierdurch bedingt hat dann das elastomere Bindemittel einen erhöhten Anteil an der Stabilisierung des Dichtungsmaterials zu übernehmen, obwohl einerseits das Elastomer den thermisch am geringsten belastbaren der eingesetzten Rohstoffe darstellt und andererseits einer Alterung unterliegt, die den langzeitigen Zusammenhalt der faser- und pulverförmigen Füllstoffe beeinträchtigt.

Abhängig von der üblicherweise verwendeten R-Kautschuktype als Elastomermaterial (Dien-Elastomere wie NBR, SBR, NR etc.) und der Menge der darin copolymerisierten Terpolymere (beispielsweise Acrylnitril oder Styrol) enthalten die für Dichtungsmaterial hauptsächlich verwendeten Kautschuktypen bis zu 35% ungesättigte Kohlenstoffdoppelbindungen, die sie oxidationsanfällig machen, weil diese Doppelbindungen direkt mit Sauerstoff zu Hydroperoxiden reagieren können. Durch anschließende Abstraktion des H-Atoms an dem entstandenen Hydroperoxid kommt es zur Bildung von Polymerradikalen und damit zu einem Brechen des Makromoleküls. Die meßbaren Auswirkungen dieser meist aeroben thermischen Alterung sind unter anderem eine signifikante Zunahme des Elastizitätsmoduls und die damit verbundene Abnahme der Flexibilität, d.h. eine Zunahme der Versprödung. Wegen letzterer kann dann bereits bei geringen Lastwechseln an einem Dichtflansch, etwa ausgelöst durch die Dilatation von Rohrleitungssystemen beim An- und Herunterfahren von Anlagen, eine Mikrorißbildung auftreten, die bis zu einem totalen Ausblasen der Dichtung führen kann.

Ein weiteres Problem bildet hierbei auch die Postvulkanisation von ungesättigten Kohlenstoffdoppelbindungen in der Hauptkette des Elastomermaterials. Solange sich noch unvernetzte Diene in der Hauptkette in Anwesenheit von noch nicht aufgebrauchten Vernetzungsreagenzien (beispielsweise Schwefel, Schwefelspender oder peroxidisch erzeugte Radikale) befinden, unterliegt das Elastomermaterial noch lange Zeit nach seiner Prozeßvulkanisation einer Nachvernetzung. Diese führt bei Dichtungen ebenfalls zu einer Verhärtung des Materials mit den vorstehend aufgeführten Auswirkungen.

Aufgabe der Erfindung ist es daher, ein elastomergebundenes Plattenmaterial nach dem Oberbegriff des Anspruchs 1 und Verfahren nach dem Oberbegriff des Anspruchs 10 zu seiner Herstellung zu schaffen, die dazu führen, daß trotz eines relativ geringen Anteils an faserförmigen Füllstoffen ein verbessertes Langzeitverhalten, d.h. eine Verminderung der Alterungserscheinungen erzielt wird.

Diese Aufgabe wird entsprechend den Merkmalen der Ansprüche 1 bzw. 10 gelöst.

Dadurch, daß bei einem elastomergebundenen Plattenmaterial aus vulkanisiertem Elastomer mit wenigstens einem darin gebundenen Füllstoff das vulkanisierte Elastomermaterial wenigstens ein vulkanisiertes Elastomer, das im unvulkanisierten Zustand nicht mehr als 10%, vorzugsweise nicht mehr als 7% ungesättigte Kohlenstoffdoppelbindungen in der Hauptkette aufweist, in einer Menge von etwa 25 bis 70 Gew.-%, vorzugsweise etwa 40 bis 60 Gew.-% des gesamten Elastomeranteils umfaßt, wird erreicht, daß das Langzeitverhalten erheblich verbessert und der Abbau der Makromoleküle verlangsamt wird.

Dadurch, daß bei einem elastomergebundenen Plattenmaterial aus wenigstens zwei miteinander verbundenen, durch vulkanisiertes Elastomermaterial gebundenen und wenigstens einen Füllstoff enthaltenden, durch Aufvulkanisation fest verbundenen Schichten wenigstens eine Schicht mittels eines vulkanisierten Elastomers, das im unvulkanisierten Zustand nicht mehr als 10%, vorzugsweise nicht mehr als 7% ungesättigte Kohlenstoffdoppelbindungen in der Hauptkette, insbesondere eines teilhydrierten R-Kautschuks oder M-Kautschuks mit zumindest im wesentlichen gesättigten Hauptketten vom Polymethylen-Typ, aufweist, gebunden ist, wird die Oxidationsempfindlichkeit weiter erheblich verringert und die Verlangsamung des Abbaus der Makromoleküle weiterhin erhöht. Hierbei ist wesentlich, daß das Plattenmaterial keine homogene Struktur, hergestellt durch die Verwendung einer Elastomermischung etwa aus M- und R-Kautschuken, aufweist, sondern - wie angegeben - aus mindestens zwei heterogenen Schichten besteht, von denen aber mindestens eine ausschließlich durch das genannte Elastomer mit einer Anzahl von ungesättigten Kohlenstoffdoppelbindungen ≤ 10% in der Hauptkette gebunden ist. Weitere Schichten können entweder ausschließlich durch einen R-Kautschuk oder jede beliebige Kombination aus R-Kautschuken, inklusive teilhydrierten R-Kautschuken, und/oder M-Kautschuken gebunden werden. Die jeweiligen Schichten "mit und ohne Kohlenstoffdoppelbindungen" wechseln sich zweckmäßigerweise ab.

Die Notwendigkeit dieser heterogenen Schichten ergibt sich unter anderem aus den Konkurrenzreaktionen bei der Vernetzung bei gleichzeitiger Anwesenheit mehrerer Elastomere. So werden diverse Diene aufgrund ihrer unterschiedlichen Partialladungen, sterischen Geometrien oder konjugierten Doppelbindungen früher oder schneller vernetzt und beanspruchen daher sämtliche brückenbildenden Reagenzien für sich. Dies hätte zur Folge, daß die minder reaktiven, in der Mischung vorhandenen Elastomere aufgrund des Mangels an Vernetzungsreagenzien kaum bis nicht vernetzt werden können. Wäre dies der Fall, läge ein Elastomer unvernetzt bzw. nicht ausreichend vernetzt in dem Plattenmaterial vor und könnte dadurch seine Funktion als stabilisierende Matrix, die die faserförmigen und pulverförmigen Füllstoffe bindet, nicht erfüllen.

Der separate Aufbau von heterogenen Schichten ermöglicht des weiteren den Einsatz von unterschiedlichen Vernetzungssystemen innerhalb eines Plattenmaterials. Dadurch kann für jedes Elastomer bzw. jede Elastomermischung ein optimal, beispielsweise in Bezug auf pH-Wert, Beschleuniger, Aktivatoren, eingestelltes Vulkanisationssystem verwendet werden, so daß sich eine optimale Vernetzung ergibt.

Weitere Ausgestaltungen der Erfindung sind der nachfolgenden Beschreibung und den Unteransprüchen zu entnehmen.

Die Erfindung wird nachstehend im einzelnen anhand von Beispielen und Verfahrensbeschreibungen näher erläutert.

Fig. 1 zeigt ein elastomergebundenes Plattenmaterial für Dichtungen entsprechend einer bevorzugten Ausführungsform im Schnitt.

Fig. 2 zeigt einen Zweiwalzenkalander zur Herstellung von elastomergebundenem Plattenmaterial.

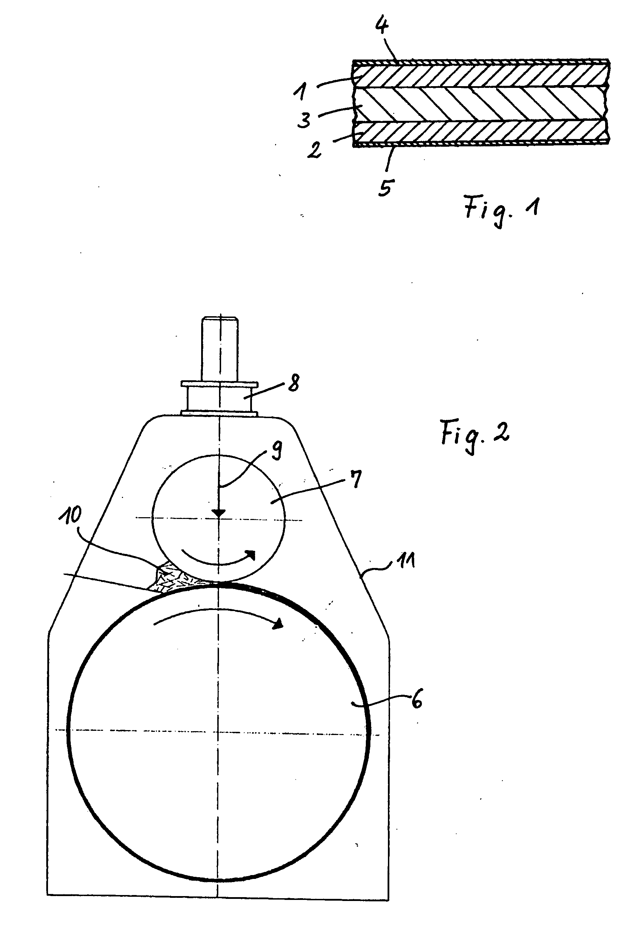

Das in Fig. 1 im Schnitt dargestellte Ausführungsbeispiel eines zur Herstellung von Flachdichtungen geeigneten Plattenmaterials umfaßt zwei Schichten 1, 2 , deren Füllstoffe mittels Nitril-Butadienkautschuk, teilhydriert mit einem Anteil an Dienen < 7% gebunden sind. Zwischen diesen beiden Schichten 1, 2 befindet sich eine Schicht 3, deren Füllstoffe mittels mindestens einem R-Kautschuk gebunden sind. Die Schichten 1 bis 3 sind durch Aufvulkanisation fest miteinander verbunden. Die Schichten 1 bis 3 können Dicken von etwa 100 µm und 4 mm aufweisen. Zusätzlich können außenseitig dünne Beschichtungen 4, 5 für besondere Applikationsbedingungen, etwa als Klebe- oder Trennschichten, vorgesehen sein. Außerdem können einzelne der oder alle Schichten 1 bis 3 eine Verstärkung in Form eines Gewebes, insbesondere eines Drahtgewebes, oder aus Streckmetall aufweisen.

Der in Fig. 2 beispielhaft dargestellte Zweiwalzenkalander verfügt über eine große (1 bis 6 m Umfang), beheizte (typischerweise 140 bis 190°C) Walze 6 und eine darüber befindliche Kühlwalze 7 (typischerweise 10 bis 30°C) geringeren Umfangs, die sich gegenläufig drehen. Die Kühlwalze 7 wird in Richtung auf die beheizte Walze 6 mittels eines Hydraulikzylinders 8 entsprechend dem Pfeil 9 gedrückt. Eine pastöse oder krümelige Masse 10 zur Herstellung einer Schicht des Plattenmaterials wird in den Walzenspalt eingeführt. Zum Auffangen von verdampfendem Lösungsmittel ist der Zweiwalzenkalander in einem entsprechenden Gehäuse 11 untergebracht.

Zur Herstellung des Plattenmaterials werden die einzelnen Rohstoffe wie Elastomermaterial, Vulkanisationszusätze, pulverförmige Füllstoffe, Fasermaterial und Verarbeitungshilfsmittel zusammen mit einem meist organischen Lösungsmittel wie Benzin, Toluol oder Xylol in einem Schnellaufmischer homogen vermischt. Wenn mehr als ein Elastomer verwendet wird, wird das Blenden hiervon gleichzeitig im Schnellaufmischer durchgeführt. Die Reihenfolge der Zugabe der Rohstoffe ist von der Materialkomposition abhängig. Das Mischwerkzeug kann mit Rührschaufeln bzw. Rührmessern und gegebenenfalls mit einem oder mehreren Hochgeschwindigkeitsmesserköpfen ausgestattet sein. Durch das Mischen erhält man eine pastöse oder krümelige Masse. Diese wird anschließend in einem Zweiwalzenkalander gemäß Fig. 2 zu Plattenmaterial weiterverarbeitet, indem die pastöse oder krümelige Masse in den Walzenspalt eingebracht und von den typischerweise mit gleicher Umfangsgeschwindigkeit rotierenden Walzen 6, 7 durch deren gegenläufige Drehbewegung eingezogen wird. Hierdurch baut sich das Plattenmaterial unter Verdampfen des Lösungsmittels und beginnender Vernetzung des Kautschuks an der Oberfläche der beheizten Walze 6 in dünnen Lagen (etwa 0,008 bis 0,02 mm) auf. Diese Lagen werden kontinuierlich mit jeder weiteren Umdrehung der Walze 6 um eine weitere Lage aufgebaut. Jede Lage wird unmittelbar nach dem Aufwalzen während der Umdrehung der Walze 6 getrocknet, vulkanisiert und durch den Anpreßdruck zwischen den Walzen 6, 7 verdichtet. Nach Erreichen der gewünschten Enddicke der jeweils herzustellenden Schicht und Fertigstellung aller Schichten des Plattenmaterials werden die Walzen 6, 7 auseinander gefahren und angehalten, das die Walze 6 umschlingende Plattenmaterial wird aufgeschnitten und von der Walze 6 abgezogen. Aus dem so erhaltenen Plattenmaterial können einsatzfähige Flachdichtungen etwa typischerweise durch Ausstanzen oder Schneiden, Laserschneiden, Hochdruckwasserstrahlschneiden, oder Sägen hergestellt werden.

### Beispiel 1: Masse 1 mit ausschließlich einem R-Kautschuk als Matrix

In einem Turbularmischer wurden folgende Rohstoffe zu einer krümeligen Masse homogen vermischt.
◆ 13-17 Teile R-Kautschuk; hier Nitril-Butadienkautschuk
◆ 38-45 Teile Kaolin
◆ 3-8 Teile gefällte Kieselsäure
◆ 5-9 Teile para-Aramidfaser
◆ 25-30 Teile Glasfaser
◆ 2-3 Teile auf Schwefel basierende Vulkanisationzusätze, bestehend aus Schwefel, Aktivator, Beschleuniger, Co-Aktivatoren und Verarbeitungshilfsmittel

Der NBR wurde während des Mischens mit 28-33 Teilen (bezogen auf die Gesamtmenge Trockenstoffe) Toluol in Lösung gebracht.

### Beispiel 2: Masse 2 mit einem Blend aus R-und M-Kautschuk oder teilhydrierten R-Kautschuken als Matrix

In einem Turbularmischer wurden folgende Rohstoffe zu einer krümeligen Masse homogen vermischt.
◆ 6,5-8,5 Teile R-Kautschuk; Nitril-Butadienkautschuk
◆ 6,5-8,5 Teile M-Kautschuk oder Kautschuk mit einem Anteil an Dienen <7%, hier teilhydrierter Nitril-Butadienkautschuk (34 ±1 % ACN, 3-5% Restdoppelbindungen)
◆ 38-45 Teile Kaolin
◆ 3-8 Teile gefällte Kieselsäure
◆ 5-9 Teile para-Aramidfaser
◆ 25-30 Teile Glasfaser
◆ 2-3 Teile auf Schwefel basierende Vulkanisationszusätze, bestehend aus Schwefel, Schwefelspender, Aktivator, Beschleuniger, Co-Aktivatoren und Verarbeitungshilfsmittel

Beide Elastomere wurden während des Mischens mit 28-33 Teilen (bezogen auf die Gesamtmenge Trockenstoffe) Toluol in Lösung gebracht.

### Beispiel 3: Masse 3 mit ausschließlich einem M-Kautschuk oder einem teilhydrierten R-Kautschuk als Matrix

In einem Turbularmischer wurden folgende Rohstoffe zu einer krümeligen Masse homogen vermischt.
◆ 13-17 Teile M-Kautschuk; oder Kautschuk mit einem Anteil an Dienen <7%, hier teilhydrierter Nitril-Butadienkautschuk (34 ±1 % ACN, 3-5% Restdoppelbindungen)
◆ 38-45 Teile Kaolin
◆ 3-8 Teile gefällte Kieselsäure
◆ 5-9 Teile para-Aramidfaser
◆ 25-30 Teile Glasfaser
◆ 2-3 Teile auf Schwefel basierende Vulkanisationszusätze, bestehend aus Schwefel, Schwefelspender, Aktivator, Beschleuniger, Co-Aktivatoren und Verarbeitungshilfsmittel

Der HNBR wurde während des Mischens mit 28-33 Teilen (bezogen auf die Gesamtmenge Trockenstoffe) Toluol in Lösung gebracht.

### Beispielhafte Herstellung von Musterplatten

Zur Herstellung von Musterplatten wurde ein Zweiwalzen-Vertikalkalander gemäß Fig. 2 verwendet.

Die mit Druckwasser beheizte Walze 6 wurde auf 180± 5°C Oberflächentemperatur beheizt. Der Umfang der Walze 6 betrug 4060 mm bei einer Breite von 1560 mm. Die Kühlwalze 7 wurde mittels Kühlwasser auf eine Oberflächentemperatur von 20± 5°C gekühlt. Der Umfang der Kühlwalze 7 betrug 1585 mm bei einer Breite von 1560 mm. Die Kühlwalze 7 wurde mit einer Kraft von 90 ± 1 kN an die Walze 6 angepreßt. Gleichzeitig bewegen sich beide Walzen 6, 7 gegenläufig mit einer Umfangsgeschwindigkeit (u.a. abhängig von der Plattendicke) von 30-90 m/min. Während des Drehens der beiden Walzen 6, 7 wurden die vorbereiteten Massen 10 portionsweise in den Walzenspalt eingebracht. Die Einwaage aller Massen 10 wurde derart gewählt, daß nach der Beendigung des Kalandrierens eine Dichtungsplatte einer Dicke von 2 mm abgezogen werden konnte.

Jeweils 30 kg Gesamtgewicht der vorbereiteten Massen 1 bis 3 wurden zu Dichtungsplatten einer Dicke von 2 mm verwalzt, siehe nachstehende Tabelle:

| Muster Nr.: | Anzahl & Dicke Schichten | Relativer Anteil Binder | |
|---|---|---|---|
| 1 | 1 (2 mm) | 100% NBR Masse gemäß Beispiel 1 | |
| 2 | 1 (2 mm) | 100% HNBR Masse gemäß Beispiel 3 | |
| 3 | 1 (2 mm) | 50%HNBR / 50%NBR Masse gemäß Beispiel 2 | |
| 4 | 3 | Anteil relativ | Anteil absolut |
| | 0,5 mm | 1. Schicht: 100% HNBR | 25% HNBR Masse gemäß Beispiel 3 |
| | 1,0 mm | 2. Schicht: 100% NBR | 50% NBR Masse gemäß Beispiel 2 |
| | 0,5 mm | 3. Schicht: 100% HNBR | 25% HNBR Masse gemäß Beispiel 3 |
| | | Summe Anteil absolut: 50%HNBR / 50%NBR | |

Im Gegensatz zu den Musterplatten 1 bis 3 wurden für die Herstellung des Musters 4 sowohl Masse 1 als auch Masse 3 zu einer Platte, bestehend aus 3 Schichten, verarbeitet. Dabei wurde wie folgt vorgegangen. Als erstes wurden 7,5 kg der Masse 3 unter den selben Prozeßbedingungen wie bei Muster 1 bis 3 verwalzt, verdichtet und vulkanisiert. Ohne die Walzen zum Stillstand zu bringen, also im direkten Anschluß, wurde auf die erste Schicht der Masse 3 15 kg der Masse 1 aufgewalzt, verdichtet und vulkanisiert. Erneut wurde im direkten Anschluß, ohne zwischenzeitlich die Walzen zum Stillstand zu bringen, abermals 7,5 kg der Masse 3 aufgewalzt, verdichtet und vulkanisiert. Die Musterplatte 4 besteht somit aus drei zusammenhängenden Schichten (wie in Fig. 1 dargestellt) wobei die obere und untere Schicht ausschließlich mit HNBR gebunden sind, und die mittlere Schicht NBR als Matrix verwendet.

Wichtig und entscheidend an dieser Stelle ist die Tatsache, daß sich Musterplatte 3 und Musterplatte 4 in der Gesamtheit aus denselben Rohstoffen (ausgenommen Vulkanisationsreagenzien) in derselben Menge zusammensetzten, aber die Elastomere auf Grund der separaten Verarbeitung in heterogenen Schichten vorliegen. Abhängig von dem eingesetzten Elastomer können auch die Vernetztungszusätze der unterschiedliche Schichten differieren, um für jeden Kautschuk eine optimale Vulkanisationscharakteristik zu erzielen.

Um einerseits die Auswirkungen der verwendeten Elastomere und andererseits den Einfluß der Struktur, in der die Elastomere vorliegen, auf das Alterungsverhalten der Dichtungen zu quantifizieren, wurden Hochtemperatur-Sattdampfprüfungen an den Musterplatten durchgeführt. Dieser Test eignet sich hervorragend dazu, das Abbauverhalten von elastomergebundenen Flachdichtungen unter extrem kritischen Bedingungen zu prüfen, so daß eine Differenzierung zwischen verschiedenen Dichtungsmaterialien möglich wird, da die hohen Temperaturen von 320°C und das Sattdampfambiente mit einem Druck von 120 bar die Elastomere bei dieser Prüfung sowohl thermisch als auch oxidativ enorm belasten.

Aus den Musterplatten 1 bis 4 wurden Dichtringe mit den Abmessungen Dₐ= 98 mm, Dᵢ= 58 mm, d=2 mm gestanzt. Diese Proben wurden in den Prüfstand mit einer Flächenpressung von 44 N/mm² in einem geschlossenen Blindflansch eingespannt. In diesem geschlossenem Blindflansch befanden sich 10 g demineralisiertes Wasser. Der Blindflansch wurde auf 320°C temperiert. Das innen befindliche Wasser ging teilweise in die Gasphase über und bildete innerhalb des Blindflansches ein Sattdampfambiente. Da der Blindflansch geschlossen war, stand jener, der Dampfdruckkurve entsprechend, unter 120 bar Innendruck. Dieser Innendruck wurde in Abhängigkeit von der Zeit mittels eines Datalogers aufgezeichnet.

Ein plötzlicher Druckabfall innerhalb des Blindflansches, verursacht durch den Dampfaustritt entlang von Rissen oder zerstörtem Gefüge der Probe, indiziert ein Versagen der Dichtung auf Grund von Degradation des Elastomers.

Die Dauer bis zum plötzlichen Druckabfall dieses Systems kann als Meßgröße für die Alterungsbeständigkeit der Dichtung respektive des eingesetzten Elastomers herangezogen werden.

Für die Musterplatten 1 bis 4 ergeben sich Standzeiten von 4, 17, 15 bzw. 30 Tagen und damit entsprechende Verlangsamungen des Alterungsprozeßes. Die Substitution der Hälfte von NBR durch HNBR führt bereits zu einer wesentlichen Standzeitverlängerung, die allerdings trotz gleicher Rohstoffe und Verfahrensparameter bei der Herstellung nur halb so lang ist wie bei der Musterplatte 4, die aus heterogenen Schichten besteht und eine stark erhöhte thermische und oxidative Beständigkeit aufweist. Deshalb ist ein aus entsprechenden Schichten bestehendes Plattenmaterial bevorzugt.

Als faserförmige Füllstoffe können auch wahlweise eine oder mehrere der folgenden Fasern eingearbeitet werden: para-Aramidfasern, Kohlenstoffasern, keramische Fasern, Cellulosefasern ebenso wie Fasern aus Cellulosederivaten, Baumwollfasern, faserförmige Wollastonite, Glasfasern, Steinwollfasern oder Polymerfasern etc.

Als pulverige Füllstoffe können auch wahlweise eine oder mehrere der folgenden Materialien eingearbeitet werden: Kalziniertes oder unkalziniertes Kaolin, Schwerspat, Wollastonite, Glimmermehl, Schiefermehl, Quarzmehl, Ruß, Graphit, Glasmehl, Calciumcarbonat, Kork, diverse Kieselsäuren, Siliciumcarbid, Siliciumnitrid, Titanoxid, Bornitrid od.dgl.

Füllstoffe können, soweit möglich und zweckmäßig, zur Einstellung bestimmter Eigenschaften oberflächenbehandelt sein, z.B. mit Silanen, Titanaten, Stanaten etc.

Als Vernetzungssysteme können auch wahlweise eine oder mehrere der folgenden Gruppen an Vernetzungschemikalien eingesetzt werden: Schwefel-Beschleuniger Systeme, Schwefel-Spender Systeme, Peroxide, energiereiche Strahlung oder Diamine oder Phophat- oder Thiophosphatvernetzungssysteme.

Als Verarbeitungshilfsmittel oder Zusätze können auch wahlweise eine oder mehrere der folgenden Stoffe verwendet werden: Trennmittel, Mastiziermittel, Stabilisatoren, Antioxidantien, Haftmittel, organische und anorganische Farben, Treibmittel Weichmacher oder Vulkanisationsverzögerer.

Als Matrixmaterial der R-Kautschuke ist vorzugsweise eines oder mehrere der folgenden Elastomere einzusetzen: NR, NBR, SBR, BR, IR oder CR (Abkürzungen gemäß ISO 1629).

Als Matrixmaterial der M-Kautschuke bzw. Kautschuke mit einem Gehalt an ungesättigten Doppelbindungen <10% vorzugsweise in der Hauptkette und insbesondere <7% läßt sich wenigstens eines der folgenden Elastomere einsetzen: EPDM, EPM, HNBR, ACM, AECM, FKM oder EAM. Teilhydrierte Kautschuke wie HSBR, HNR, HCR etc. kommen ebenfalls als Matrixmaterial infrage.

Als Lösungsmittel können, entsprechend dem Elastomer, folgende polare oder unpolare Substanzen zum Einsatz kommen: Benzin, Benzol, Toluol, Xylol, Ethanol, THF, Wasser, Ester, Ketone oder Dichlormethan.

Das Plattenmaterial kann auch durch unabhängiges Herstellen von Schichten 1 bis 3 und anschießendes Verbinden der Schichten durch Vulkanisation oder durch aufeinanderfolgendes Herstellen der Schichten 1 bis 3 in einer beispielsweise an den Verwendungszweck angepaßten Form hergestellt werden.

## Patentansprüche

1. Elastomergebundenes Plattenmaterial umfassend einen vulkanisierten Elastomeranteil und einen Anteil aus wenigstens einem darin gebundenen Füllstoff, **dadurch gekennzeichnet, dass** wenigstens zwei Schichten aus vulkanisiertem Elastomer mit wenigstens einem darin gebundenen Füllstoff vorgesehen sind, die durch Aufvulkanisation fest miteinander verbunden sind, wobei bei wenigstens einer der Schichten der Füllstoff durch wenigstens ein Elastomer, das nicht mehr als 10%, vorzugsweise nicht mehr als 7% ungesättigte Kohlenstoffdoppelbindungen in der Hauptkette in unvulkanisiertem Zustand aufweist, gebunden ist.

2. Material nach Anspruch 1, **dadurch gekennzeichnet, dass** der vulkanisierte Elastomeranteil, welcher im unvulkanisierten Zustand nicht mehr als 10%, vorzugsweise nicht mehr als 7%, ungesättigte Kohlenstoffdoppelbindungen in der Hauptkette aufweist, in einer Menge von etwa 25 bis 70 Gew.-%, vorzugsweise etwa 40 bis 60 Gew.-%, des gesamten Elastomeranteils umfasst.

3. Material nach einem der Ansprüche 1 oder 2, **dadurch gekennzeichnet, dass** die Füllstoffe pulverförmige, plättchenförmige oder faserige Form besitzen und in einem Anteil von wenigstens 30 Gew.-% des jeweiligen Schichtmaterials enthalten sind.

4. Material nach Anspruch 3, **dadurch gekennzeichnet, dass** die Füllstoffe ausgewählt sind aus der Gruppe gebildet aus organischen und anorganischen Substanzen.

5. Material nach einem der Ansprüche 1 oder 2, **dadurch gekennzeichnet, dass** die Füllstoffe ausgewählt sind aus der Gruppe umfassend para-Aramidfasern, Glasfasern, Steinwollfasern, Kohlenstofffasern, keramische Fasern, Cellulosefasern, Cellulosederivatfasern, Baumwollfasern, faserförmigen Wollastoniten, Polymerfasern, kalzinierten Kaolinen, unkalzinierten Kaolinen, Schwerspat, pulverförmigen Wollastoniten, Glimmer, Schiefer, Quarz, Russ, Graphit, Glasmehl, Calciumcarbonat, Kork, Siliciumdioxid, SiC, Siliciumnitrid und gegebenenfalls oberflächenbehandelt sind.

6. Material nach einem der Ansprüche 1 bis 5, **dadurch gekennzeichnet, dass** wenigstens eine Schicht durch wenigstens ein Elastomer aus der Gruppe umfassend NR, NBR, SBR, BR, IR, CR, EPDM, EPM, HNBR, ACM, AECM, FKM, CSM und EAM gebunden ist.

7. Material nach einem der Ansprüche 1 bis 4, **dadurch gekennzeichnet, dass** wenigstens eine Schicht durch wenigstens ein Elastomer aus der Gruppe umfassend EPDM, EPM, HNBR, ACM, AECM, FKM und EAM gebunden ist.

8. Material nach einem der Ansprüche 1 bis 7, **dadurch gekennzeichnet, dass** die Schichten eine Dicke etwa zwischen 100 µm und 4 mm aufweisen.

9. Material nach einem der Ansprüche 1 bis 8, **dadurch gekennzeichnet, dass** sich jeweils eine Schicht gebunden durch wenigstens ein Elastomer mit nicht mehr als 10%, vorzugsweise nicht mehr als 7% ungesättigte Kohlenstoffdoppelbindungen in der Hauptkette mit einer Schicht gebunden durch wenigstens ein Elastomer mit mehr als 20% ungesättigten Kohlenstoffdoppelbindungen in der Hauptkette abwechselt.

10. Verfahren zur Herstellung eines elastomergebundenen Plattenmaterials aus wenigstens zwei Schichten, wobei für jede Schicht ein Ausgangsgemisch umfassend einen Elastomeranteil, Vernetzungsreagenzien, Verarbeitungshilfsmittel und Füllstoffe in Gegenwart eines Lösungsmittels durch Mischen hergestellt wird, und die Ausgangsgemische in Schichten aufeinanderfolgend zu dem Plattenmaterial, wobei die Schichten durch Aufvulkanisation fest verbunden sind, verarbeitet werden, wobei zur Herstellung des Ausgangsgemischs für wenigstens eine Schicht ausschliesslich ein Elastomeranteil aus wenigstens einem vulkanisierten Elastomer, das in seiner Hauptkette im unvulkanisierten Zustand nicht mehr als 10%, vorzugsweise nicht mehr als 7% ungesättigte Kohlenstoffdoppelbindungen aufweist, verwendet wird.

11. Verfahren nach Anspruch 10, **dadurch gekennzeichnet, dass** die Ausgangsgemische mittels eines Zweiwalzenkalanders mit einer beheizten und einer gekühlten Walze zu Schichten verarbeitet werden.

12. Verfahren nach Anspruch 10 oder 11, **dadurch gekennzeichnet, dass** zur Herstellung des Ausgangsgemischs für wenigstens eine Schicht als Elastomermaterial ein solches aus der Gruppe umfassend einen R-Kautschuk, eine Kombination von R-Kautschuken, eine Kombination aus M-Kautschuken und eine Kombination von R- und M-Kautschuken verwendet wird.

13. Flachdichtung aus einem Material nach einem der Ansprüche 1 bis 9.

14. Flachdichtung nach Anspruch 13, **dadurch gekennzeichnet, dass** sie aus dem Material nach einem der Ansprüche 1 bis 9 ausgestanzt oder ausgeschnitten ist.

## Claims

1. An elastomer-bound plate material comprising a vulcanized elastomeric component and a component made of at least one filler bound therein, **characterized in that** at least two layers made of vulcanized elastomer having at least one filler bound therein are provided, which are permanently bonded to one another by vulcanization, in at least one of the layers, the filler being bound by an elastomer which has no more than 10%, preferably no more than 7% unsaturated carbon double bonds in the main chain in the unvulcanized state.

2. The material according to Claim 1, **characterized in that** the vulcanized elastomeric component, which has no more than 10%, preferably no more than 7% unsaturated carbon double bonds in the main chain in the unvulcanized state, comprises a quantity of approximately 25 to 70 wt.-%, preferably approximately 40 to 60wt.-% of the total elastomeric component.

3. The material according to one of Claims 1 or 2, **characterized in that** the fillers are in powdered, flaky, or fibrous form and are contained in a proportion of at least 30 wt.-% of the respective layer material.

4. The material according to Claim 3, **characterized in that** the fillers, are selected from the group formed of organic and inorganic substances.

5. The material according to one of Claims 1 or 2, **characterized in that** the fillers are selected from the group comprising para-aramid fibers, glass fibers, rock wool fibers, carbon fibers, ceramic fibers, cellulose fibers, cellulose derivative fibers, cotton fibers, fibrous wollastonites, polymer fibers, calcified kaolins, uncalcified kaolins, barite, powdered wollastonites, mica, slate, quartz, carbon black, graphite, glass powder, calcium carbonate, cork, silicon dioxide, silicon carbide, silicon nitride, and are optionally surface-treated.

6. The material according to one of Claims 1 to 5, **characterized in that** at least one layer is bound by at least one elastomer from the group comprising NR, MBR, SBR, BR, IR, CR, EPDM, EPM, HNBR, ACM, AECM, FKM, CSM, and EAM.

7. The material according to one of Claims 1 to 4, **characterized in that** at least one layer is bound by at least one elastomer from the group comprising EPDM, EPM, HNBR, ACM, AECM, FKM, and EAM.

8. The material according to one of Claims 1 to 7, **characterized in that** the layers have a thickness between approximately 100 µm and 4 mm.

9. The material according to one of Claims 1 to 8, **characterized in that** respectively one layer bound by at least one elastomer having not more than 10%, preferably not more than 7% unsaturated carbon double bonds in the main chain alternates with one layer bound by at least one elastomer having more than 20% unsaturated carbon double bonds in the main chain.

10. A method for producing an elastomer-bound plate material made of at least two layers, a starting mixture comprising an elastomeric component, cross-linking reagents, processing aids, and fillers being produced in the presence of a solvent by mixing for each layer, and the starting mixtures being processed in layers in succession to form the plate material, the layers being permanently bonded by vulcanization, to produce the starting mixture for at least one layer, exclusively an elastomeric component made of at least one vulcanized elastomer, which has not more than 10%, preferably not more than 7% unsaturated carbon double bonds in its main chain in the unvulcanized state, being used.

11. The method according to Claim 10, **characterized in that** the starting mixtures are processed into layers by means of a two-roller calender having one heated roller and one cooled roller.

12. The method according to Claim 10 or 11, **characterized in that** an elastomeric material from the group comprising an R rubber, a combination of R rubbers, a combination of M rubbers, and a combination of R and M rubbers is used as the elastomer c material for producing the starting mixture for at least one layer.

13. A flat seal made of a material according to one of Claims 1 to 9.

14. The flat seal according to Claim 13, **characterized in that** it is stamped or cut out of the material according to one of Claims 1 to 9.

## Revendications

1. pourcentage d'au moins une matière de remplissage liée avec, **caractérisé en ce qu'**au moins deux couches d'élastomère vulcanisé avec au moins une matière de remplissage liée avec sont prévues, lesquelles sont fixées ensemble par vulcanisation, sachant que pour au moins l'une des couches, la matière de remplissage est liée par au moins un élastomère qui ne présente pas plus de 10%, de préférence pas plus de 7% de doubles liants carbone non saturés dans la chaîne principale à l'état non vulcanisé.

2. Matériau selon la revendication 1, **caractérisé en ce que** le pourcentage d'élastomère vulcanisé qui à l'état non vulcanisé, ne présente pas plus de 10%, de préférence pas plus de 7% de doubles liants carbone non saturés dans la chaîne principale, représente un poids d'environ 25 à 70 %, de préférence d'environ 40 à 60% de l'ensemble du pourcentage d'élastomère.

3. Matériau selon l'une des revendications 1 ou 2, **caractérisé en ce que** les matières de remplissage possèdent une forme poudreuse, de paillettes ou de fibres et que leur poids représente au moins 30% du matériau de la couche correspondante.

4. Matériau selon la revendication 3, **caractérisé en ce que** les matières de remplissage sont choisies dans le groupe composé de substances organiques et anorganiques.

5. Matériau selon l'une des revendications 1 ou 2, **caractérisé en ce que** les matières de remplissage sont choisies dans le groupe comportant des fibres para-aramides, des fibres de verre, des fibres de laine de roche, des fibres de carbone, des fibres céramiques, des fibres cellulosiques, des dérivés de fibres cellulosiques, des fibres de laine, des wollastonites fibreux, des fibres polymères, des kaolins calcinés, des kaolins non calcinés, du barytite, des wollastonites poudreux, du mica, du schiste, du quartz, de la suie, du graphite, de la poudre de verre, du carbonate de calcium, du liège, du dioxyde de silicium, du SiC, du nitrure de silicium et sont éventuellement traitées en surface.

6. Matériau selon l'une des revendications 1 à 5, **caractérisé en ce qu'**au une couche est liée par au moins un élastomère du groupe comportant NR, NBR, SBR, BR, IR, CR, EPDM, EPM, HNBR, ACM, AECM, FKM, CSM et EAM.

7. Matériau selon l'une des revendications 1 à 4, **caractérisé en ce qu'**au une couche est liée par au moins un élastomère du groupe comportant EPDM, EPM, HNBR, ACM, AECM, FKM et EAM.

8. Matériau selon l'une des revendications 1 à 7, **caractérisé en ce que** les couches présentent une épaisseur d'environ 100 µm et 4 mm.

9. Matériau selon l'une des revendications 1 à 8, **caractérisé en ce qu'**une couche liée par au moins un élastomère avec pas plus de 10%, de préférence 7% de doubles liants carbone non saturé dans la chaîne principale alterne avec une couche liée par au moins un élastomère avec plus de 20% de doubles liants carbone non saturé dans la chaîne principale.

10. Procédé de production d'un matériau en plaque lié à l'élastomère composé d'au moins deux couches, sachant que pour chaque couche, un mélange initial comportant un élastomère, des réactifs de réticulation, des agents auxiliaires de transformation et des matières de remplissage en présence d'un solvant est produit, et que les mélanges initiaux sont superposés pour être transformés en matériau en plaque, sachant que les couches sont fixées par vulcanisation, sachant que pour la production du mélange initial pour au moins une couche, on utilise exclusivement un pourcentage d'élastomère à base d'au moins un élastomère vulcanisé, qui à l'état non vulcanisé dans sa chaîne principale ne présente pas plus de 10%, de préférence 7% de doubles liants carbone non saturés.

11. Procédé selon la revendication 10, **caractérisé en ce que** les mélanges initiaux sont transformés en couches à l'aide d'une calandre à deux cylindres, avec un cylindre chauffé et un cylindre refroidi.

12. Procédé selon l'une des revendications 10 ou 11, **caractérisé en ce que** pour la production du mélange initial pour au moins une couche de matériau élastomère on utilise un élastomère du groupe comportant un caoutchouc R, une combinaison de caoutchoucs R, une combinaison de caoutchoucs M et une combinaison de caoutchoucs R et M.

13. Joint plat en matériau conforme à l'une des revendications 1 à 9.

14. Joint plat selon la revendication 13, **caractérisé en ce qu'**il est poinçonné ou découpé dans le matériau conforme à l'une des revendications 1 à 9.
